Europäisches Patentamt

European Patent Office

Office européen des brevets

(11) Publication number: **0 321 568 B1**

# EUROPEAN PATENT SPECIFICATION

(45) Date of publication of patent specification: **28.10.92**     (51) Int. Cl.⁵: **G06F 9/38**

(21) Application number: **87907525.7**

(22) Date of filing: **11.11.87**

(86) International application number:
**PCT/JP87/00877**

(87) International publication number:
**WO 88/03681 (19.05.88 88/11)**

(54) PIPELINE CONTROL SYSTEM.

(30) Priority: **12.11.86 JP 269447/86**

(43) Date of publication of application:
**28.06.89 Bulletin 89/26**

(45) Publication of the grant of the patent:
**28.10.92 Bulletin 92/44**

(84) Designated Contracting States:
**DE FR GB**

(56) References cited:
**JP-A- 5 798 044
JP-A-55 500 390
JP-B- 568 380**

**COMPUTER DESIGN, vol. 25, no. 14, August
1986, pages 109-112, Littleton, Massachu-
setts, US; T. PAI: "FIFO RAM controller tack-
les deep data buffering"**

**ELECTRONIC DESIGN, vol. 29, no. 24, Novem-
ber 1981, pages 205-214, Waseca, MN, US; A.
WEISSBERGER: "FIFOs eliminate the delay**

**when data rates differ"**

**PATENT ABSTRACTS OF JAPAN, vol. 7, no.
30 (P-173)[1175], 5th February 1983; & JP-
A-57 182 837 (NIPPON VICTOR K.K.)
10-11-1982**

(73) Proprietor: **FANUC LTD.**
**3580, Shibokusa Aza-Komanba, Oshino-mura
Minamitsuru-gun, Yamanashi 401-05(JP)**

(72) Inventor: **KINOSHITA, Jiro
252, Shimotsuruma
Yamato-shi Kanagawa 242(JP)**

(74) Representative: **Brunner, Michael John et al
GILL JENNINGS & EVERY 53-64 Chancery
Lane
London WC2A 1HN(GB)**

EP 0 321 568 B1

# Description

The present invention relates to a pipeline type control system having processing modules and queues connected in series, and more particularly to such a control system which includes interrupt control circuits added to respective processing modules for improving the processing speed which would otherwise be lowered due to the difference in processing times of the modules.

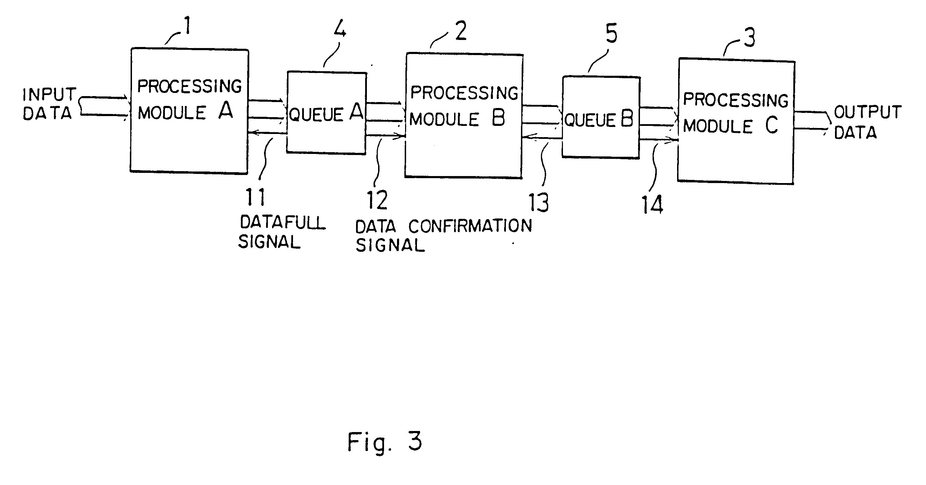

An example of a widely known pipeline type control system, for processing a large amount of data at a high speed, is shown in block form in FIG. 3 of the accompanying drawings. Denoted in FIG. 3 at 1, 2, and 3 are processing modules for processing data, each composed of a processor and a memory of small capacity, 4 and 5 are buffer memories called queues normally comprising FIFO (first-in-first-out) devices, 11 and 13 are data full signals for confirming whether the data in the queues 4, 5 are transferred to the next processing modules or not, and 12 and 14 are data confirmation signals for confirming whether required data have been transferred to and stored in the queues 4, 5 when the next processing modules 2, 3 read the data.

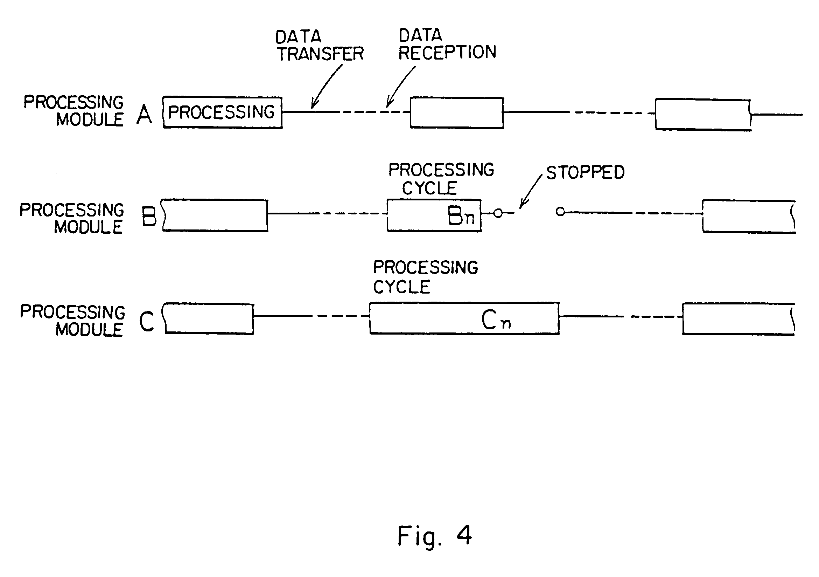

Input data are processed by the three processing modules 1, 2, and 3 and then delivered out as output data. Such a data flow is illustrated in FIG. 4 of the accompanying drawings. Rectangular frames in FIG. 4 indicate processing of the data in the respective processing modules. The solid lines represent transfer of the data from the processing modules 1, 2, and 3, and the dotted lines indicate reading of the data by the processing modules 1, 2, and 3.

The operation of the system is carried out such that the processing modules have equal shares in data processing. If the processing modules process the data at equal speeds, then the entire processing operation of the system will be effected smoothly.

However, as shown in FIG. 4, when the processing module B2 has completed its Bn-th processing cycle and attempts to transfer processed data to the queue 5, and if the processing module C3 is effecting, but has not yet completed its Cn-th processing cycle, the processed data in the queue B5 is not transferred to the processing module C3, and hence the processing module B2 cannot transfer its processed data to the queue B5. Therefore, the processing module B2 has to wait until the processing cycle in the processing module C3 is finished and the processing operation of the processing module B2 is interrupted.

Thus, if the processing time of one processing module is too long, processed data in the preceding processing module cannot be transferred to that one processing module, and the preceding processing module has to stop its processing operation.

A system of this general type is shown in JP-A-57-182837 which includes means for controlling the input to and output of data from the queues to avoid input and output occuring together.

It is an object of the present invention to provide a pipeline control system including interrupt control circuits added respectively to processing modules for improving processing speed which would otherwise be lowered due to the difference between different processing times of the processing modules.

In order to eliminate the aforesaid problems, there is provided in accordance with a first aspect of the present invention, a pipeline type control system comprising:

a plurality of processing modules and queues connected in series, each processing module having an internal memory for holding data for or after processing, characterised by

interrupt control circuits connected to respective processing modules; and

means for applying an interrupt request signal to the interrupt control circuit connected to one of the processing modules to apply an interrupt signal to that processing module to read data into its internal memory from a queue preceding that processing module if the preceding processing module attempts to transfer data to the queue and data in the queue has not yet been read by the one processing module.

According to a second aspect of the invention, there is provided a pipeline type control system comprising:

a plurality of processing modules and queues connected in series, each processing module having an internal memory for holding data for or after processing, characterised by

interrupt control circuits connected to respective processing modules; and

output means for applying an interrupt start signal to the interrupt control circuit of one of the processing modules to apply an interrupt signal to that processing module to transfer processed data from an internal memory thereof to a queue following that processing module if the next following processing module attempts to read data from the queue and no data is stored in the queue.

One example of a system according to the present invention will now be described with reference to the accompanying drawings, in which:-

FIG. 1 is a block diagram of an embodiment of the present invention;

FIG. 2 is a timing chart of the embodiment of the invention;

FIG. 3 is a block diagram of a conventional pipeline type control system; and

FIG. 4 is a timing chart of the conventional control system.

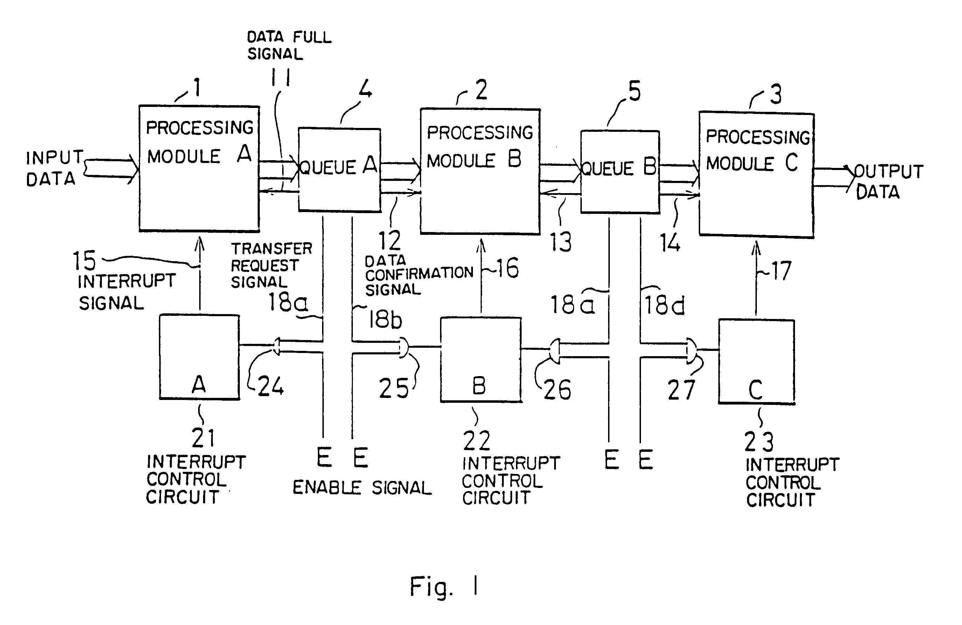

Denoted in FIG. 1 are processing modules 1,2,3 for processing data, each composed of a processor and a memory of small capacity, buffer memories 4,5 called queues and normally comprising FIFO (first-in-first-out) devices, data full signals 11,13 for confirming whether the data in the queues 4, 5 are transferred to the next processing modules or not, and data confirmation signals 12,14 for confirming whether required data have been transferred to and stored in the queues 4, 5 when the next processing modules 2,3 read the data. Designated at 18a through 18d are transfer request signals. Interrupt control circuits 21,22,23 are provided for interrupting the processing modules 1 through 3 in response to signals from the queues A4, B5, and AND gates 24,25,27 for gating the signals from the queues 4,5 with an enable signal E.

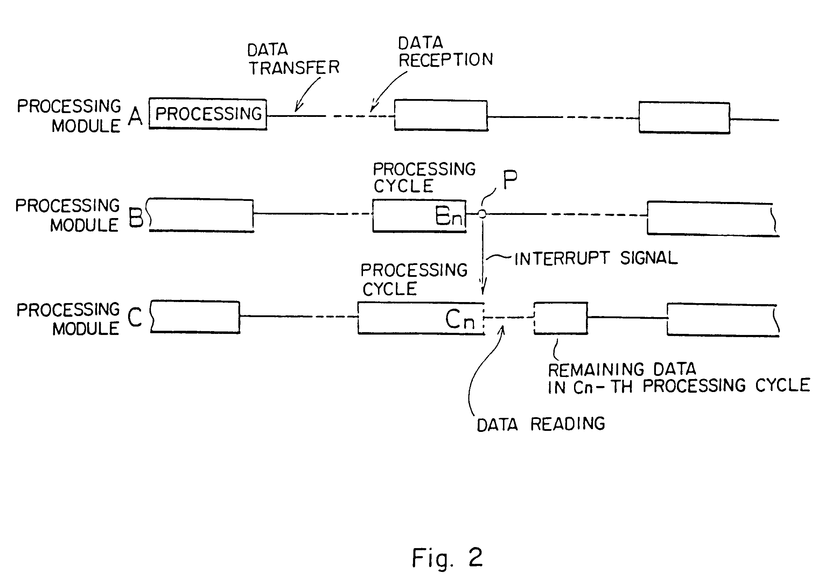

Operation of the pipe line control system will be described. FIG. 2 is a timing chart of the embodiment shown in FIG. 1. The symbols and their meanings in FIG. 2 are the same as those of FIG. 4. That is, rectangular frames indicate processing of the data in the respective processing modules, the solid lines represent transfer of the data to the queues, and the dotted lines indicate transfer (read-in) of new data to the processing modules.

It is assumed, by way of example, that the processing module 82 has completed its Bn-th processing cycle and attempts to transfer processed data to the queue B5 at a point P, but the processing module C3 is still effecting its Cn-th processing cycle, and previous data remains in the queue B5. The queue B5 now issues a transfer request signal which is sent through the gate 27 to the interrupt control circuit C23, which then interrupts the processing module C3. The processing module C3 interrupts the Cn-th processing cycle, and reads in the data from the queue B5. Upon completion of the data reading operation, the data full signal 13 is turned off, and the processing module B2 starts transferring the processed data to the queue B5 for next processing operation. The processing module C3 then effects the remaining portion of the Cn-th processing cycle.

As described above, the interrupt control circuit operates to enable the next following processing module, even if it is still executing a processing cycle, to read in data upon an interrupt, so that the preceding processing module can transfer its processed data. Accordingly, the entire system is prevented from being lowered in its processing speed.

Likewise, when the processing cycle in the processing module C is finished early, data is not yet transferred to the queue B5, and hence the data transfer confirmation signal 14 is off. If, however, there is processed data in an internal memory of the processing module B2, transfer of that processed data can be requested. More specifically, the queue B5 issues a transfer request signal which is applied via the gate 26 to the interrupt control circuit B22, which then interrupts the processing module B2. The processing module B2 now transfers its processed data from the internal memory to the queue B5. After the data has been transferred, the data confirmation signal 14 is turned on to enable the processing module C3 to read in the data from the queue B5.

Although the relationship between the processing modules B2, C3 has been described above, the relationship between the processing modules A1, B2 is the same as described above. The same circuit arrangement can be applied where the number of processing modules is increased. When an interrupt inhibit condition between the processing modules is met, the enable signal E is set to a logic "0" level to inhibit any interrupt operation between these processing modules.

With the present invention, as described above, even if the next following processing module is processing data, it may be interrupted by the interrupt control circuit to transfer data from the queue to that processing module, so that data can be transferred from the preceding processing module. Consequently, the entire processing speed of the system can be improved or is prevented from being lowered without interrupting the processing cycle of the preceding processing module.

When the processing cycle in the next following processing module is finished early, the preceding processing module may be interrupted to transfer processed data from the internal memory of the preceding processing module for thereby preventing the processing speed of the next following processing module from being lowered.

**Claims**

1.  A pipeline type control system comprising:

    a plurality of processing modules (1-3) and queues (4,5) connected in series, each processing module having an internal memory for holding data for or after processing, characterised by

    interrupt control circuits (21-23) connected to respective processing modules; and

    means for applying an interrupt request signal (18) to the interrupt control circuit connected to one of the processing modules (2) to apply an interrupt signal (16) to that processing module to read data into its internal memory from a queue (4) preceding that processing module if the preceding processing module (1) attempts to transfer data to the queue (4) and data in the queue has not yet been read by the one processing module (2).

2. A pipeline type control system comprising:

a plurality of processing modules (1-3) and queues (4,5) connected in series, each processing module having an internal memory for holding data for or after processing, characterised by

interrupt control circuits (21-23) connected to respective processing modules; and

output means (18) for applying an interrupt start signal (18) to the interrupt control circuit (12) of one of the processing modules to apply an interrupt signal (17) to that processing module (2) to transfer processed data from an internal memory thereof to a queue (5) following that processing module if the next following processing module (3) attempts to read data from the queue (5) and no data is stored in the queue.

3. A pipeline type control system according to claim 1 and claim 2.

**Patentansprüche**

1. Steuerungssystem für die Fließbandverarbeitung mit mehreren, in Serie geschalteten Verarbeitungsmodulen (1-3) und Warteschlangen (4, 5), wobei jedes Verarbeitungsmodul einen internen Speicher zum Halten von Daten für oder nach Verarbeitung aufweist, gekennzeichnet durch Unterbrechungssteuerkreise (21-23), die mit den entsprechenden Verarbeitungsmodulen verbunden sind, und ein Mittel zur Anwendung eines Anforderungssignals (18) zur Unterbrechung auf den Unterbrechungssteuerkreis, der mit einem der Verarbeitungsmodule (2) verbunden ist zur Anwendung eines Unterbrechungssignals (16) auf dieses Verarbeitungsmodul, um Daten in seinen internen Speicher aus einer diesem Verarbeitungsmodul vorausgehenden Warteschlange (4) einzulesen, wenn das vorausgehende Verarbeitungsmodul (1) versucht, Daten in die Warteschlange (4) zu übertragen, und die Daten in der Warteschlange noch nicht durch das eine Verarbeitungsmodul (2) gelesen worden sind.

2. Steuersystem mit mehreren, in Serie geschalteten Verarbeitungsmodulen (1-3) und Warteschlangen (4, 5), wobei jedes Verarbeitungsmodul einen internen Speicher zum Halten von Daten für oder nach Verarbeitung aufweist, gekennzeichnet durch Unterbrechungssteuerkreise (21-23), die mit den entsprechenden Verarbeitungsmodulen verbunden sind, und einem Ausgabemittel (18) zur Anwendung eines Startsignals (18) zur Unterbrechung auf den Unterbrechungssteuerkreis (22) von einem der Verarbeitungsmodule zur Anwendung eines Unterberechungssignals (17) auf dieses Verarbeitungsmodul (2), um verarbeitete Daten von seinem internen Speicher auf eine diesem Verarbeitungsmodul folgende Warteschlange (5) zu übertragen, wenn das nächstfolgende Verarbeitungsmodul (3) versucht, Daten aus der Warteschlange (5) zu lesen, und keine Daten in der Warteschlange gespeichert sind.

3. Steuersystem nach Anspruch 1 und Anspruch 2.

**Revendications**

1. Système de commande de conduit du genre oléoduc comportant:

une série de modules de traitement (1-3) et de queues (4,5) reliées en série, chaque module de traitement ayant une mémoire intérieure pour retenir les données pour ou après le traitement, caractérisés par

des circuits interrupteurs de commande (21-23) reliés aux modules respectifs de traitement; et

des moyens d'application d'un signal de demande d'interruption (18) au circuit interrupteur de commande relié à l'un des modules de traitement (2) pour appliquer un signal interrupteur (16) audit module de traitement pour la lecture de données dans sa mémoire intérieure à partir d'une queue (4) antérieure audit module de traitement si le module antérieur de traitement (1) tente le transfert de données à la queue (4) et la lecture des données de queue n'a pas encore été effectuée par ledit module de traitement (2).

2. Système de commande de conduit du genre oléoduc comportant:

une série de modules de traitement (1-3) et de queues (4,5) reliées en série, chaque module de traitement ayant une mémoire intérieure retenant les données pour ou après le traitement, caractérisés par

des circuits interrupteurs de commande (21-23) reliés aux modules respectifs de traitement; et

des moyens de sortie (18) pour appliquer un signal démarreur d'interruption (18) au circuit interrupteur de commande (22) d'un des modules de traitement pour appliquer un signal interrupteur (17) audit module de traitement (2) pour le transfert des données traitées de sa mémoire intérieure à une queue (5) suivant le module de traitement si le prochain module de traitement (3) tente la lecture en l'absence de données dans la queue (5).

3. Système de commande de conduit du genre oléoduc selon la revendication 1 et la revendication 2.

Fig. 1

EP 0 321 568 B1

EP 0 321 568 B1

DATA TRANSFER

DATA RECEPTION

PROCESSING MODULE A | PROCESSING |

PROCESSING CYCLE

P

PROCESSING MODULE B | $E_n$ |

INTERRUPT SIGNAL

PROCESSING CYCLE

PROCESSING MODULE C | $C_n$ |

REMAINING DATA IN $C_n$-TH PROCESSING CYCLE

DATA READING

Fig. 2

EP 0 321 568 B1

INPUT
DATA →

**PROCESSING
MODULE A** ⌐1

→ **QUEUE A** ⌐4 →

**PROCESSING
MODULE B** ⌐2

→ **QUEUE B** ⌐5 →

**PROCESSING
MODULE C** ⌐3

→ OUTPUT
DATA

11
DATAFULL
SIGNAL

12
DATA CONFIRMATION
SIGNAL

13

14

Fig. 3

DATA
RECEPTION

DATA
TRANSFER

PROCESSING
MODULE A  PROCESSING

STOPPED

PROCESSING
CYCLE

PROCESSING
MODULE B  $B_n$

PROCESSING
CYCLE

PROCESSING
MODULE C  $C_n$

Fig. 4